# EUROPEAN PATENT SPECIFICATION

(11) **EP 0 435 086 B1**
(45) Date of publication and mention of the grant of the patent: **10.05.1995**
(21) Application number: 90124081.2
(22) Date of filing: 13.12.1990
(51) Int. Cl.: B60T 8/00, B60T 13/66

(54) **Trailer anti-swing system and method**
Verfahren und Vorrichtung zur Verhinderung von Anhängerpendelschwingungen
Procédé et dispositif pour prévenir des oscillations pendulaires d'une remorque

(30) Priority: 20.12.1989 US 454110; 20.12.1989 US 454109; 20.12.1989 US 454095
(43) Date of publication of application: 03.07.1991
(73) Proprietor: EATON CORPORATION, Cleveland, Ohio 44114 (US)
(72) Inventor: Breen, Michael Thomas, Garden City, Michigan 48135 (US); Skorupski, Jeffrey Henry, Brighton, Michigan 48116 (US)
(74) Representative: Rüger, Rudolf, Dr.-Ing.

(56) References cited:
- EP-A- 0 303 827
- DE-A- 3 327 240
- US-A- 3 398 991
- US-A- 3 894 773
- US-A- 3 993 362
- US-A- 4 223 767
- US-A- 4 849 655

## Description

### BACKGROUND OF THE INVENTION

### Field of the Invention

The present invention relates to a control system/method for controlling the braking force applied to the brakes of a towed subvehicle in an articulated vehicle system, such as the semitrailer subvehicle in a tractor-semitrailer system, to prevent, arrest or to minimize and quickly recover from, the condition known as trailer brake induced trailer swing.

### Description of the Prior Art

US-A-3 993 362 discloses an anti-jackknifing and skidding control system for trailer trucks. A linear accelerometer is located on the rear of the trailer to detect left or right skidding. The signal of this accelerometer is input to a control unit the output of which is connected to two relays. One of these relays controls the left brakes of the trailor whereas the other relay controls the right brakes of the same trailer.

The operation of this known system is such that the control unit energizes one of both relays depending on the signals that are delivered by the accelerometer. If the accelerometer senses e.g. a trailer swing that is directed to the left with respect to the driving lane the control unit causes the brakes at the left side of the trailer to be applied.

This system is hazardous insofar as a trailer swing or skidding out of the driving lane is caused by loosening transverse stability due to exceeding the static friction at the trailer wheels. If in this situation the brakes are applied the wheels are hindered to regain the grip. The trailer will not return to the driving lane.

Apart from that brake control systems for all types of vehicles including heavy duty tractor-semi trailer trucks to improve the stopping and vehicle stability thereof are, of course, well known in the prior art.

Brake systems of the anti-lock type, for all types of vehicles, are well known in the prior art. Briefly, these systems operate to maintain vehicle stability (i.e. acceptable transverse coefficient of friction of braked wheels) by maintaining the longitudinal slip of the braked wheels within predetermined limits. This usually requires modulating the braking forces on an individual wheel and/or individual axle basis to maintain at least some wheel rotation.

Examples of prior art anti-lock brake systems ("ABSs") may be seen by reference to U.S. Patent Nos. 3,767,270; 3,768,872; 3,854,556; 3,893,696; 3,929,383; 3,929,382; 3,966,267; 4,392,202 and 4,591,213.

Brakes systems which control braking to achieve a driver demand, sense driver demand in a "brake-by-wire" manner, sense coefficient of friction and modify brake forces accordingly, sense load on a wheel and modify braking effort accordingly, sense wheel slip and/or use electronic signals to achieve trailer brake response are also disclosed in the prior art as may be seen by reference to U.S. Patent Nos. 4,140,352; 4,327,414; 4,494,199; 4,512,615; 4,545,240; 4,591,213; 4,606,586; 4,616,881; 4,648,663 and 4,768,840.

Brake systems for heavy duty articulated vehicles such as tractor-semitrailer trucks are difficult to design as the loading and maintenance will vary in a truck, such as the loading on the tractor of a tractor-trailer which may comprise a tractor only, a tractor with an empty or lightly loaded trailer or a tractor with a heavily loaded trailer.

Further, tractor-semitrailers are, by their nature, capable of exhibiting certain unstable dynamic behaviors known as jackknife and trailer swing, each of which has its own characteristic cause, effect and appropriate sequence of corrective action. Jackknife is sometimes called "tractor brake caused jackknife" while trailer swing is sometimes called "trailer brake caused jackknife".

The dynamics of undesirable trailer articulation events, such as a jackknife event, are discussed in SAE Paper No. 710045, the disclosure of which is hereby incorporated by reference.

Various systems to prevent or minimize undesirable trailer articulation have been proposed. These include mechanical devices such as chains or variable pivot resistance devices and also wheel speed sensors and anti-lock controls on the trailer per se. Examples of these prior art devices may be seen by reference to U.S. Patent Nos. 3,618,983; 3,810,521; 3,894,773; 4,023,864, 4,405,145 and 4,620,717.

The prior art devices were not satisfactory as the mechanical devices were somewhat slow to react, hindered required articulation during normal operation, required specially equipped/configured trailers and/or did not allow for a recovery from the locked-in condition. The anti-lock (ABS) type systems were not totally satisfactory as most existing trailers do not have ABS equipment, tractors are often driven with a variety of trailers and thus even if a trailer is provided with ABS equipment, it may not be compatible with the tractor ABS, providing all existing and future trailers with ABS equipment is prohibitively expensive and, under certain conditions, undesirable trailer articulation may occur in the absence of the wheel lock conditions sensed and reacted to by existing ABSs.

### SUMMARY OF THE INVENTION

In accordance with the present invention, many of the drawbacks of the prior art have been overcome or minimized by the provision of a trailer anti-swing control system/method which is suitable for use with semitrailers equipped with standard (i.e., non-ABS) brake controls and will control the pilot or actuation pressure supplied to the trailer brake system to halt sensed trailer swing and allow the trailer to safely recover therefrom.

The above is accomplished by providing, preferably entirely on the tractor, an ABS type valve located on the tractor upstream from the glad hand connection, sensors for sensing and/or providing signals allowing the calculation of tractor/trailer articulation angle ("AA"), rate of change of articulation angle ("dAA/dt") and rate of change of rate of change of articulation angle ("d²AA/dt²) and a control device, preferably microprocessor based, for receiving input signals, processing same in accordance with predetermined logic rules and issuing command output signals to control the trailer brake ABS type valve.

For a more responsive control, higher order time derivatives of articulation angle may be used. The "ABS type valve" should have the functions of lowering pressure to release the trailer brakes, holding the pressure at a low value to maintain brakes released, then reapplying the brakes in a controlled manner to a desired reapply pressure, all independent of the degree of braking effort demanded by the vehicle driver.

Accordingly, it is an object of the present invention to provide an improved trailer brake control system/method for the trailer type subvehicle of an articulated vehicle system, such as the trailer of a tractor-semitrailer truck system, which is operative to detect the onset of and prevent, or to minimize and allow recovery from, a trailer swing condition. Preferably, all of the control components, at least the active control components, will be mounted on the tractor subvehicle and will allow use of the control system with any standardly equipped trailer subvehicle.

This and other objects and advantages of the present invention will become apparent from a reading of the detailed disclosure of the preferred embodiments taken in connection with the drawings.

### BRIEF DESCRIPTION OF THE DRAWINGS

Figure 1 is a schematic illustration of a conventional heavy duty tractor-semitrailer truck articulated vehicle.

Figure 2 is a schematic illustration of a tractor mounted brake control system including an anti-lock brake system, and also incorporating the trailer anti-swing control system of the present invention.

Figure 3 is a schematic illustration of a standard trailer brake system which may be utilized with the trailer anti-swing brake control system of the present invention. Figure 3 also illustrates alternative sensor 260.

Figure 4 is an enlarged, fragmentary, schematic illustration of the king pin/fifth wheel pivotal connection between a tractor and a semitrailer illustrating the angular relationship defined by the articulation angle.

Figure 5 is a graph illustrating the trailer brake applied pressure versus time curve(s) for the trailer anti-swing control system/method of the present invention.

Figure 6 is a schematic illustration of the occurrence of an uncontrolled trailer swing event.

Figure 7 is an illustration of a floating rotor potentiometer type of articulation angle sensor for the control system/method of the present invention.

Figure 8 is an illustration of an ultrasonic distance sensor type articulation angle sensor for the control system/method of the present invention.

Figure 9 is a schematic illustration of a magnetic field direction sensor type of articulation angle sensor for the control system/method of the present invention.

Figure 10 is a schematic illustration of a glad hand transmitter type articulation angle sensor for the control system/method of the present invention.

Figure 11 is a schematic illustration, in the form of a flow chart, of the trailer anti-swing control system/method of the present invention.

### DESCRIPTION OF THE PREFERRED EMBODIMENT

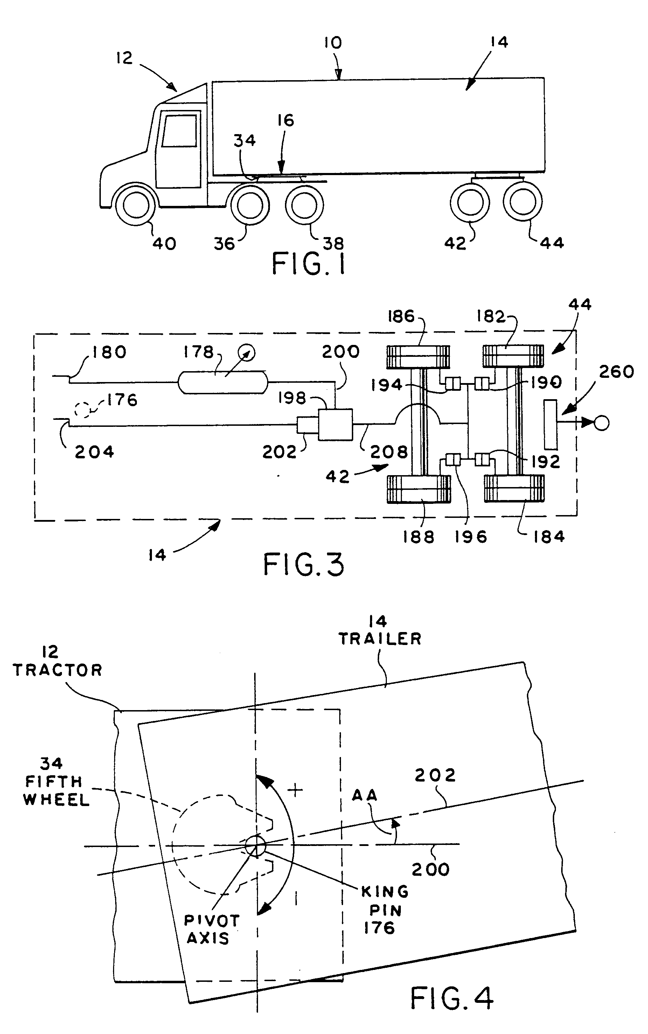

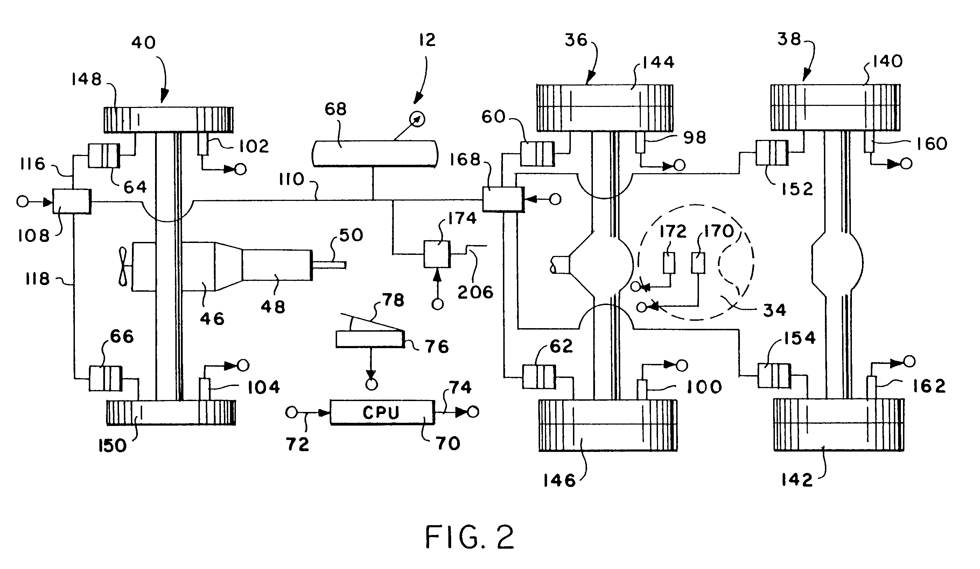

The trailer anti-swing control system/method of the present invention is applicable to articulated multiple vehicle systems such as the tractor-semitrailer system 10 illustrated in Figure 1. Briefly, as is well known to the prior art, the tractor-semitrailer system 10 comprises a tractor 12 and a semitrailer 14 attached thereto by a connecting means 16 which comprises the well known fifth wheel 34 fixed to the tractor for selective engagement with a king pin fixed to the trailer. The tractor typically comprises a pair or tandem set of rear drive axles 36 and 38 and a front steer axle 40. The trailer 14 typically comprises a tandem pair of non-steerable, non-driven trailer axles 42 and 44. Typically, but not necessarily, the front axle 40 will have non-driven steerable wheels. The tractor and/or the trailer may be equipped with single axles or three or more axles.

The ability to utilize fifth wheel/king pin connections to relatively quickly and easily couple or connect standardly equipped tractors to standardly equipped semitrailers in an articulated or pivoted manner provides the well appreciated advantages of commercial and operational flexibility as well as increasing the maneuverability of the vehicles. However, under certain conditions, often associated with braking while negotiating a curve or a turn, one or both of the tractor-semitrailer subvehicles may lose transverse stability resulting in a condition of uncontrolled excessive articulation, i.e. jackknife or trailer swing. Tractor-semitrailer uncontrolled excessive articulation is generally considered to consist of two distinct types of events, namely "jackknife" and "trailer swing", both of which may lead to catastrophic results.

Jackknifing, which is considered to be the most severe and least correctable type of uncontrolled excessive trailer articulation event, usually results from the tractor subvehicle, usually the tractor subvehicle drivewheels, losing transverse stability, usually while cornering, which lack of stability is quickly compounded by the often relatively many times greater inertia imposed by the trailer. The other type of uncontrolled excessive trailer articulation event, trailer swing, is generally the result of the trailer wheels, 42 and 44, losing transverse stability usually while cornering resulting in the trailer swinging radially outwardly relative to the center of the curve being negotiated which may result in the trailer to swinging into adjacent traffic lanes with the obvious potential for catastrophic results therefrom.

Trailer swing events often occur less rapidly than the jackknife events, and upon sensing conditions indicative of the advent of a trailer swing condition corrective action may be taken of the trailer brakes to minimize the extent of trailer swing and to cause the trailer to resume its tracking condition.

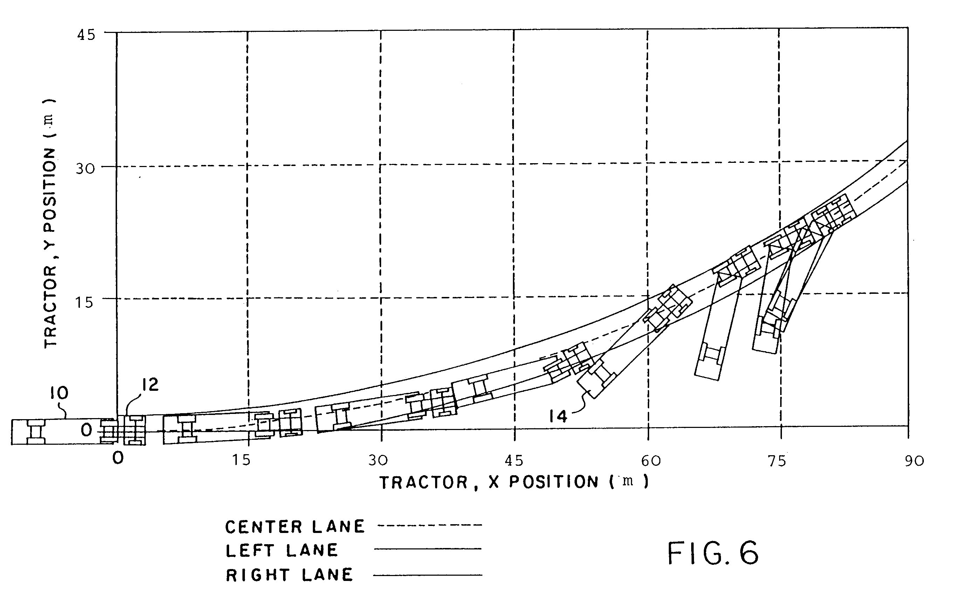

As is very well known, decreasing the slip of a tire will dramatically increase the transverse coefficient of friction thereof. Accordingly, trailer swing induced by locked or almost locked trailer brakes, if sensed at the onset or initiation thereof, may be arrested or reduced by increasing the transverse stability of the trailer wheels by releasing the brakes thereof and allowing the wheels to roll up to or towards vehicle speed. The schematic illustration of an extreme trailer swing event may be seen by reference to Figure 6 wherein the trailer at the right-hand portion of the illustrated curve has swung totally out of its lane. The purpose of the control system/method of the present invention is to prevent the occurrence of, or to minimize the extent of, trailer brake induced trailer swing events.

The trailer anti-swing control system/method of the present invention is preferably utilized with a tractor 12 fully equipped with an ABS system and a trailer 14 equipped with a standard, i.e. non-ABS, brake system. However, the control of the present invention would also provide benefits if utilized with a vehicle having both tractor and trailer ABS as, under certain conditions, undesirable trailer articulation may occur even though the vehicle wheels have not locked up to the extent that is necessary to cause corrective action by currently existing ABS systems. Additionally, although not preferred, the trailer anti-swing control system/method of the present invention will provide a degree of improved vehicle stability when utilized on a tractor trailer system wherein neither the tractor nor the trailer was provided with an ABS logic control.

As stated above, the purpose of the present invention is to prevent or minimize trailer brake induced trailer swing events while the occurrence of jackknife events is minimized by the provision of the tractor ABS control logic and devices.

A braking system for the tractor 12 of an articulated tractor-semitrailer system 10 which utilizes the trailer anti-swing control system/method of the present invention may be seen by reference to Figure 2. It is noted that while the braking system for tractor 12 illustrated in Figure 2 is of the "brake by wire" type, the present invention is equally applicable to other types of brake controls and ABS systems.

Briefly, as is well known in the prior art, tractor 12 includes a front steer axle 40, which is usually not driven, and a tandem pair of rear drive axles comprising front-rear drive axle 36 and rear-rear drive axle 38. Wheels 140 and 142 are associated with the rear-rear drive axle 38, wheels 144 and 146 are associated with the front-rear drive axle 36 and wheels 148 and 150 are associated with the front steer axle 40. The rear drive axles, 36 and 38, are driven by engine 46 through transmission 48 and driveline 50.

Air actuated brake chambers 60, 62, 152, and 154 are provided for retarding the rotation of wheels 144, 146, 140 and 142, respectively. The rear brakes 60, 62, 152 and 154 are, as is well known in the prior art, of the same size and type as likewise are the front brakes 64 and 66 which are provided for selectively braking the rotation of front steer drive axle wheels 148 and 150, respectively. In the system illustrated, the brakes are air actuated brakes of one of the well known types, such as the "S" cam actuated brake type or the air disc brake type, the details of which are well known in the prior art and may be seen in greater detail by reference to U.S. Patent Nos. 4,476,968 and 4,457,407, the disclosures of both of which are hereby incorporated by reference. While all of the front brakes and all of the rear brakes should be of the same size and type, it is not necessary, and is not preferable, that the front and rear brakes be of the same size. Compressed air for actuating the brakes is supplied from a plurality of supply tanks 68, only one of which is shown, which supply tanks are provided with compressed air from the vehicle onboard compressor (not shown) or the like.

The braking system includes a control unit 70, which for purpose of flexibility and responsiveness is preferably an electronic microprocessor based control unit having means 72 for receiving a plurality of input signals, means for processing input signals in accordance with predetermined logic rules, and means 74 for issuing command output signals to various system operators.

A sensor 76 senses the operator's displacement of a brake pedal 78 to provide an input signal indicative of the driver's demand or vehicle stopping effort. Sensors of this type are known in the prior art and may be seen by reference to above-mentioned U.S. Patent Nos. 4,140,352; 4,327,414 and 4,512,615. Typically, such transducers will sense the displacement of and/or force applied to the brake pedal 78 and will provide an output signal proportional thereto. As indicated above, the present invention is equally applicable to more conventional brake systems wherein the amount of braking effort is controlled by a well known treadle valve. To provide tractor ABS operation, wheel speed sensors 160, 162, 98, 100, 102, 104 are provided for providing input signals indicative of the rotational speed of wheels 140, 142, 144, 146, 148 and 150, respectively.

The central processing unit 70 will, as is well known in the ABS prior art, process the input signals in accordance with predetermined logic rules to generate command output signals to the front control valve 108 and the rear control valve 168. Briefly, control valve 108 is connected to the supply tank 68 through supply line 110, and, in accordance with the command output signals from CPU 70, independently pressurizes the conduits 116 and 118 leading to air brakes 64 and 66, respectively. Rear control valve 168 is also connected to supply tank 68 through supply line 110 and, in accordance with command output signals from CPU 70, individually provides pressurized fluid via branch conduits to the rear axle brakes 60, 62, 152 and 154. Accordingly, it may be seen that the braking efforts of each of the tractor wheels may be individually controlled for ABS purposes in a closed loop manner in response to command output signals generated by the CPU 70 in response to the input signals received and processed thereby, as is known ABS technology.

To provide the trailer anti-swing control system/method of the present invention, the tractor braking system is also provided with one or more sensors 170 and 172, preferably mounted on the tractor such as at the fifth wheel 34, for providing input signals to CPU 70 indicative of and/or allowing the calculation of the current articulation angle (AA), and of time derivatives thereof such as the rate of change of articulation angle (dAA/dt) and the rate of change of the rate of change of articulation angle (d²AA/dt²). Of course, sensors may be provided for directly sensing one or more of the time derivatives of articulation angle. In addition, a control valve 174, controlled by command outputs from CPU 70, will provide pilot or controls to the standard trailer brake system control valves. Preferably, the control valve 174 is located on the tractor just upstream of one of the gladhand connectors 206. Valve 174 may be replaced by a standard treadle valve having an output proportional to the displacement of brake pedal 78 and an ABS type valve connected in series downstream therefrom.

Applicant's convention for the measurement of articulation angle, and the first and second derivatives thereof with respect to time, and various sensing means for sensing same will be described in greater detail below.

Referring now to Figure 3, a prior art standard trailer brake system (i.e, non-ABS) is illustrated. Briefly, the trailer includes a king pin 176 for selective engagement and disengagement to the tractor fifth wheel 34 as is well known in the prior art. The trailer includes a supply tank 178 connected to the tractor air system by means of a fluid connection 180. Trailer axles 42 and 44 support trailer wheels 182, 184, 186 and 188, each of which is provided with an air brake actuators or chambers 190, 192, 194 and 196, respectively. Typically, all of the trailer brakes are controlled at the same pressure by means of a relay valve 198 which has an inlet 200 connected to the trailer supply tank 178 and a pilot valve portion 202 for receiving a pilot air signal from the tractor air system by means of connector 204. Each of the trailer brakes is actuated at approximately the same pressure from a single output 208 from a pilot controlled relay valve 198.

Connector 204 is designed for connection with connector 206 on the tractor. Briefly, the connectors 204 and 206 and likewise connector 180 and its associated connection with a vehicle air system (not shown) form the fluid connection commonly known as the "gladhand".

Applicant's convention, which will be used throughout this application, for the measure of the articulation angle (AA) may be best understood by reference to Figure 4 wherein the pivot axis between the tractor 12 and trailer 14 defined by the fifth wheel 34 and king pin 176 connection is viewed from the top of the vehicle, i.e. with the trailer extending rearwardly from left to right as shown in Figure 4. The articulation angle between the tractor and trailer, AA, is defined as the included angle between the longitudinal axis 200 of the tractor 12 passing through the king pin/fifth wheel pivot axis and the longitudinal axis 202 of the trailer 14 passing through the fifth wheel/king pin pivot axis. The articulation angle AA is measured from the tractor longitudinal axis 200 to the trailer longitudinal axis 202 and is assigned a positive value in the counterclockwise direction and a negative value in the clockwise direction. In the example shown in Figure 4, accordingly, the articulation angle AA would have a positive value under applicant's herein defined convention.

Referring to Figure 6, as vehicle 10 moves generally from left to right as seen in Figure 6 around the corner defined by the curved lane, it may be seen that the wheels of the trailer 14 lose transverse stability and, under the influence of centrifugal force, and a retarding force provided by the tractor itself the trailer 14 will pivot about the king pin such that articulation angle will typically pass through zero, then change signs as the swing out phenomenon progresses. In a trailer swing event, the trailer 14 swinging out of its lane is a potentially hazardous occurrence. This is an example of the type of trailer swing event that the anti-trailer swing control method and control system of the present invention is intended to prevent, arrest, or to minimize and allow rapid recovery from.

The loss of transverse stability of the trailer wheels sufficient to result in a trailer swing event as illustrated in Figure 6, is typically associated with an application of the trailer brakes resulting in wheel slip exceeding a desirable value and/or total wheel lock. To prevent the occurrence of a trailer brake induced trailer swing event, or to arrest and minimize the extent thereof and to allow quick recovery therefrom, it is desirable that conditions indicative of incipient or actual onset of trailer swing be quickly sensed and that the vehicle brake system react thereto by releasing the trailer brakes allowing the trailer wheels to roll back up towards vehicle speed to minimize the slip and increase the transverse coefficient of friction, and thus increase the centripetal force of the trailer wheels.

The trailer anti-swing control method and system of the present invention is operable to sense conditions indicative of incipient, or the onset of, a trailer brake induced trailer swing event by the sensing and/or calculating, if the vehicle brakes are applied and at least one or more of the articulated vehicles' articulation angle, and a time derivative of articulation angle such as the first derivative of articulation angle with respect to time and/or the second derivative of articulation angle with respect to time. It is important to sense trailer swing at the initiation or onset, i.e. prior to the trailer swinging towards an almost zero articulation angle position, to have sufficient time to arrest and/or minimize the condition. It is also important to distinguish trailer swing from jackknife as different corrective responses are required.

Briefly, one method of sensing an incipient trailer swing event is the sensing of conditions, when the brake pedal is applied, wherein the articulation angle (AA) and a time derivative thereof such as the first derivative of the articulation angle with respect to time (dAA/dt) are of opposite signs (which is an indication that the trailer 14 is swinging outwardly from the center of a curve which the tractor-semitrailer vehicle is traversing) and the absolute value of the second derivative of the articulation angle with respect to time (d²AA/dt²) exceeds the absolute value of a predetermined reference indicating that the trailer is swinging rapidly radially outwardly from the center of the curve being traversed by the articulated vehicle.

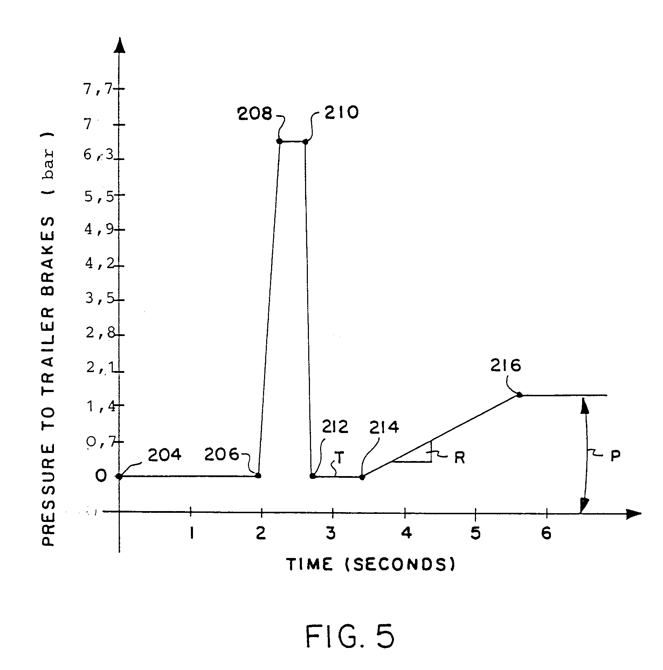

Upon sensing these conditions, the control logic of the present invention will declare the existence of conditions indicative of an incipient trailer swing event and will release the trailer brakes for a given period of time (T) selected to allow the trailer wheels to roll back up towards vehicle speed to increase the transverse stability thereof and preferably minimize or eliminate the trailer swing and allow the trailer wheels to again track on the curve. After the predetermined period of time, trailer brakes will be reapplied at a rate (R) which may be fixed or may vary with measured system variables to a reapplication pressure (P) which is preferably a function of the value of the first and/or second derivative of articulation angle with respect to time at the onset of the trailer swing event. The brakes will be maintained at this pressure peak until such time as the braking event is terminated, i.e., the operator removes his foot from the brake pedal, at which point trailer brakes will again be controlled by the treadle valve until such time as incipient trailer swing is again sensed. The application of pressure to the trailer brakes is controlled by trailer anti-swing control valve 174, an ABS type valve, which varies the pressure applied to the pilot portion 202 of the trailer relay valve 198. A graphic illustration of the pressure applied to the trailer brakes to minimize and recover from a sensed incipient trailer swing event may be seen by reference to Figure 5.

Referring to Figure 5, at point 204 to point 206 the vehicle brakes are not applied. At point 206, the vehicle operator has fully depressed the treadle valve or brake pedal 78 causing the relay valve 198 in the trailer, under the control of trailer brake control valve 174, to apply the trailer brakes with a high pressure as seen in point 208. If the operator continues to request a relatively high braking effort, trailer brakes will remain applied at a relatively high level from point 208 to point 210. For purposes of this example, at point 210 it will be assumed that the input signals processed by the CPU controller 70 indicate the existence of an incipient trailer swing event. The CPU 70 will then issue command output signals to the trailer brake control valve 174 causing the trailer brakes to be released as may be seen at point 212. The trailer brakes will be maintained in the released position for a period of time T which is selected as a time sufficient to allow the trailer wheels to roll back up to vehicle speed. Time T may be predetermined or may vary with the value of sensed inputs to the CPU. Typically, as the trailer wheels are not provided with speed sensors, this is an empirically predetermined value. Applicant has discovered that a period of time from 0.25 to 1.25, preferably from 0.50 to 0.75, seconds is sufficient to allow the trailer wheels to roll back up to approximately vehicle speed and allow the trailer brakes to be reapplied to minimize the stopping distance of the total vehicle 10.

Accordingly, at the end of the predetermined period of time T, i.e., at point 214, the trailer brakes are reapplied at a rate R until a pressure P is achieved at point 216, which pressure P is preferably a function of the sensed or calculated first and/or second derivative of the articulation angle at the onset of the trailer swing event. Vehicle brakes will then be maintained at pressure P until termination of the braking event. Applicants have discovered that a rate of reapply R equal to about 10 PSI per second is an effective rate to achieve the pressure P as rapidly as possible without resulting in a repeat trailer wheel transverse loss of stability.

Reapply pressure P and/or the rate (R) of reapply pressure are, as stated above, a function of the dynamics of the trailer swing event as sensed by the values of articulation angle, the first derivative and second derivative of articulation angle during the trailer swing event.

Briefly, the absolute values of the first and second time derivatives of articulation angle during a trailer swing event are indicative of the loading on the trailer and/or the friction coefficient of the road. The more rapid the change in articulation angle and the rate of change of the change of articulation angle, the more lightly loaded is the trailer or the lower the coefficient of friction of the road. Accordingly, for a relatively high first, second and/or higher derivative of articulation angle with respect to time, a relatively lower reapply pressure and rate of reapplying pressure is desirable while with a relatively lower first and/or second derivative of articulation angle with respect to time, a relatively higher reapply pressure may be applied to the trailer brakes without fear of causing trailer wheels to again lose transverse stability.

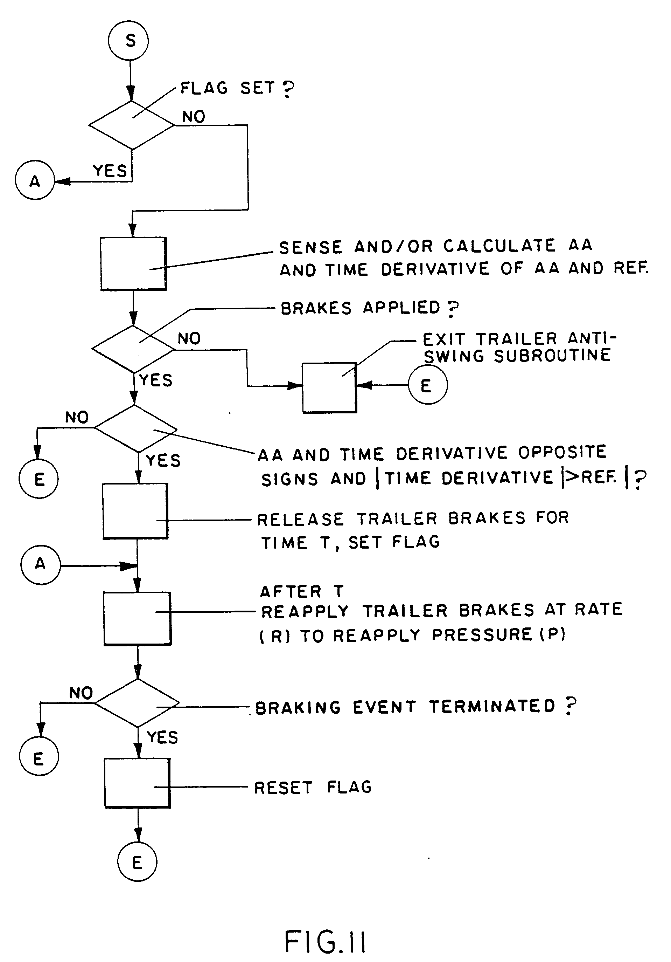

The control method of the present invention symbolically illustrated in a flow chart format by reference to Figure 11.

An alternate method of sensing the existence of conditions indicative of the onset of a trailer swing event is to sense, during a vehicle braking operation, that (i) the articulation angle (AA) and the rate of change of articulation angle (dAA/dt) are in opposite rotational directions and (ii) that the rate of change of articulation angle (dAA/dt) exceeds the absolute value of a reference value.

Upon sensing such conditions, the CPU 70 will command the controller 174 to cause the trailer brakes to be released for a period of time T and then reapplied at a rate (R) to a reapplication pressure (P) one or both of which may be functions of articulation angle (AA) and/or rate of change of rate of change of articulation angle (d²AA/dt²) either the latest values or the values at the instant of sensing the conditions.

By way of example, by comparing d²AA/dt² to a yaw reference, which yaw reference is preferably a function of the initial value of AA, it may be determined if the trailer is relatively heavy or light and/or if the road is of a relatively high or low coefficient of friction by determining if it is of a relatively high or low yaw rotational moment of inertia. As is known, for a more heavily loaded trailer and higher friction road surface, the reapply pressure and/or the rate of reapplying the trailer brakes may be higher, to more rapidly stop the vehicle i.e., without inducing transverse instability.

A further alternate method of sensing the onset of a trailer swing event is to sense during a braking operation, (i) if the articulation angle (AA) and the rate of change of the rate of change of articulation angle (d²AA/dt²) are of opposite signs, (ii) if the absolute value of articulation angle is at least equal to a predetermined value (about 1° to 3°) and (iii) if the absolute value of the rate of change of the rate of change of articulation angle exceeds the absolute value of a reference value.

As is known, the use of higher order time derivatives of sensed articulation angle will provide the possibility of earlier sensing of an incipient trailer swing condition, especially for more lightly loaded trailers and/or lower coefficient of friction road surfaces, while the use of lower order time derivatives responds somewhat later in time but will allow a less sensitive, somewhat more reliable, determination of incipient trailer swing especially for more heavily loaded trailers and/or higher coefficient of friction road surfaces. Accordingly, the various logical methods described herein for testing for trailer swing conditions are not considered to be mutually exclusive but may be used in combination with one another.

A sensing that articulation angle and a time derivative thereof are of opposite signs, and the time derivative (such as d²AA/dt²) exceeds a reference value is indicative that although the vehicle is momentarily properly articulated, the trailer is accelerating in such a manner as to swing-out from behind the tractor. If the absolute value of the time derivative (d²AA/dt²) exceeds the absolute value of the reference value, corrective action, as described above, should be taken.

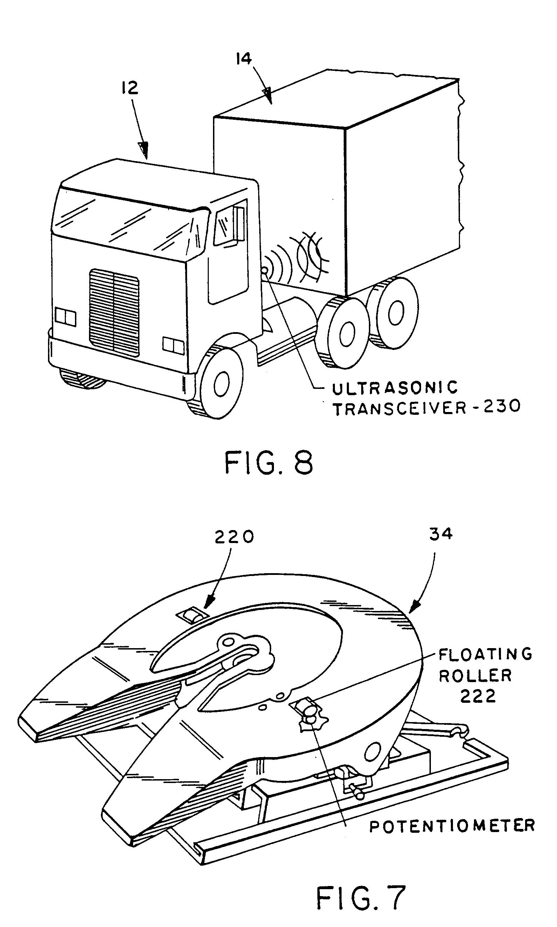

Various sensing devices for sensing the articulated vehicle articulation angle, first derivative of articulation angle with respect to time, and/or the second derivative of articulation angle with respect to time may be seen by reference to Figures 7-10. Preferably, the various sensing devices include components, all of which, or at least the active ones of which, are mounted on the tractor 12 of the tractor trailer vehicle 10.

Referring to Figure 7, a fifth wheel assembly 34 is modified by the provision of two rollers, preferably spring loaded floating rollers 220 and 222 which are associated with potentiometers or the like and which will be caused to rotate by pivotal movement of the tractor relative to the trailer to provide input signals indicative of articulation angle and/or the first or second derivatives thereof with respect to time.

Referring to Figure 8, an ultrasonic transceiver 230 is mounted to the tractor 12 and will send and receive ultrasonic signals which bounce off predetermined surfaces on the trailer 14 provide an indication of the articulated vehicle articulation angle and/or derivatives thereof.

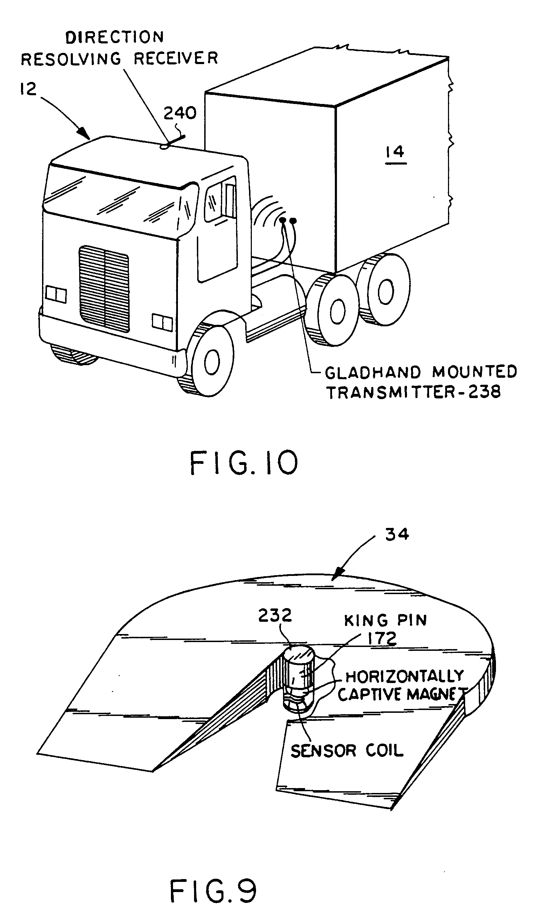

Figure 9 illustrates a fifth wheel 34 including a magnet carrying cap 232 which will fit over the trailer king pin and which will carry magnetic means for providing a magnetic sensor for sensing articulation angle and/or one of the derivatives thereof.

In Figure 3 a sensor 260 for providing signals indicative of trailer transverse motion is illustrated. The signals from sensor 260 may supplement or may be substituted for the articulation angle signals.

Figure 10 illustrates a transmitter associated with the gladhand connection at the trailer 14 which will send signals to be received by a direction resolving receiver 240 mounted on the tractor 12.

As may be seen, applicant's have provided an improved trailer brake control system/method for controlling the trailer brake application forces to prevent, arrest or minimize and provide rapid recovery from trailer swing events.

While the present invention has been described with a certain degree of particularity, it is understood that the detailed description of the preferred embodiments is by way of example only and that numerous modifications and rearrangements of the components/steps thereof is possible without departing from the scope of the present invention as hereinafter claimed.

## Claims

1. A trailer anti-swing brake control method for articulated vehicles (10) of the type comprising a tractor (12) and a trailer (14) connected at an articulating connection (34/176) defining a pivot axis (176) about which the trailer is pivotable relative to the tractor, an articulation angle (AA) of said vehicle defined by the included angle defined by a longitudinally extending axis of the trailer passing through said pivot axis (202) relative to a longitudinally extending axis of the tractor passing through said pivot axis (200), a tractor brake system, a trailer brake system, a driver operated brake effort demand device (76/78) for providing a demand input signal indicative of the magnitude of operators demand for vehicle braking, trailer brake control means (174) responsive in at least one operating mode for causing the trailer brake system to be applied with an operating force generally proportional to the magnitude of said demand input signal, said control method comprising the steps of:
sensing (17O/172) and/or calculating a value indicative of the articulation angle (AA), and a derivative of the articulation angle (d²AA/dt²) and providing articulation input signals indicative thereof;
receiving and processing said input signals (70) according to predetermined logic rules to detect the existence of conditions indicative of at least one of incipient and initial trailer brake induced trailer swing events and generating command output signals in response to detection of the existence of said conditions; and
responding (174) by said control means to said command output signals by causing the trailer brake system brakes to be applied with a substantially reduced force (210-212) regardless of the magnitude of said demand input signal.

2. The control method of claim 1 wherein said control means is mounted on said tractor.

3. The control method of claim 1 wherein said determining is by sensors (172, 174) mounted on said tractor.

4. The control method of claim 1, 2, or 3 wherein said control means responds to said command output signals by first causing said trailer brake system brakes to be substantially released (212-214) for a period of time (T) and then causing said trailer brake system brakes to be reapplied (214-216).

5. The control method of claim 4 wherein subsequent to releasing said trailer system trailer brakes said trailer brake system brakes are reapplied at a selected rate (R) to a selected maximum reapplication force (P), said selected maximum reapplication force having a magnitude considerably smaller than the maximum trailer brake system brake application force (208, 210).

6. The control method of claim 4 wherein said period of time is in the range of about 0.25 to 1.25 second.

7. The control method of claim 6 wherein said period of time is in the range of about 0.50 to 0.75 second.

8. The control method of claim 5 wherein said selected maximum reapplication force (P) is a function of, and varies inversely with, the magnitude of the absolute value of at least one of said time derivatives of articulation angle.

9. The control method of claim 1, 2, 3, 5, 6 or 8, wherein said determining comprises determining values indicative of all of articulation angle (AA), rate of change of articulation angle (dAA/dt) and rate of change of rate of change of articulation angle (d²AA/dt²) and providing articulation signals indicative thereof; and
said processing said input signals to determine the existence of said conditions comprises (i) sensing that the operator has demanded at least partial braking, (ii) sensing that articulation angle and rate of change of articulation angle are of opposite signs and (iii) sensing that the absolute value of the rate of change of the rate of change of articulation angle (d²AA/dt²) exceeds the absolute value of a predetermined reference value.

10. The method of claim 9 additionally comprising sensing a value indicative of the turning radius of said vehicle, said reference value being a function of said value indicative of turning radius.

11. The control method of claim 4 wherein said sensing comprises determining values indicative of all of articulation angle (AA), rate of change of articulation angle (dAA/dt) and rate of change of rate of change of articulation angle (d²AA/dt²) and providing articulation signals indicative thereof; and
said processing said input signals to determine the existence of said conditions comprises (i) sensing that the operator has demanded at least partial braking, (ii) sensing that articulation angle and rate of change of articulation angle are of opposite signs and (iii) sensing that the absolute value of the rate of change of the rate of change of articulation angle (d²AA/dt²) exceeds a predetermined reference value.

12. The method of claim 11 additionally comprising sensing a value indicative of the turning radius of said vehicle, said reference value being a function of said value indicative of turning radius.

13. The control method of claims 1, 2 or 3 wherein said control means comprise a relay valve connected in series with an ABS type valve.

14. The control method of claim 4 wherein said control means comprise a relay valve connected in series with an ABS type valve.

15. The control method of claim 5 wherein said control means comprise a relay valve connected in series with an ABS type valve.

16. The control method of claims 1, 2 or 3 wherein said vehicle is a tractor-semitrailer vehicle and said tractor is equipped with a tractor ABS.

17. The control method of claims 1, 2 or 3 wherein said determining comprises determining values indicative of articulation angle (AA) and at least one time derivative of articulation angle and providing articulation signals indicative thereof; and said processing said input signals to determine the existence of said conditions comprises (i) sensing that the operator has demanded at least partial braking, (ii) sensing that articulation angle and said at least one of said time derivatives of articulation angle are in opposite directions of rotation about said pivot axis and (iii) sensing that the absolute value of said at least one of said time derivatives of articulation angle exceeds the absolute value of a reference value.

18. The control method of claim 17 additionally comprising sensing a value indicative of the turning radius of said vehicle, said reference value being a function of said value indicative of turning radius.

19. The control method of claim 18 wherein said selected maximum reapplication force (P) is a function of, and varies inversely with, the magnitude of the absolute value of at least one of said time derivatives of articulation angle.

20. The control method of claim 5 wherein the magnitude of said determined maximum reapplication force is a function of at least one of articulation angle (AA) and a time derivative of rate of change of articulation angle (AA²/dt²).

21. The control method of claim 20 wherein said determined maximum reapplication force is a function of both articulation angle and the rate of change of the rate of change of articulation angle at the instant of sensing the existence of said conditions, said magnitude of determined maximum reapplication force varying inversely with the absolute value of the rate of change of the rate of change of articulation angle.

22. A trailer anti-swing brake control system for articulated vehicles (10) of the type comprising a tractor (12) and a trailer (14) connected at an articulating connection (34/176) defining a pivot axis (176) about which the trailer is pivotable relative to the tractor, an articulation angle (AA) of said vehicle defined by the included angle defined by a longitudinally extending axis of the trailer passing through the pivot axis (202) relative to a longitudinally extending axis of the tractor passing through said pivot axis (200), a tractor brake system, a trailer brake system, a driver operated brake effort demand device (76/78) for providing a demand input signal indicative of the magnitude of operators demand for vehicle braking, trailer brake control means (174) responsive in at least one operating mode for causing the trailer brake system to be applied with an operating force generally proportional to the magnitude of said demand signal, said control system comprising:
means (170/172) for determining a value indicative of the articulation angle (AA) and a time derivative (dAA/dt, d²AA/dt²) thereof and providing at least one articulation signal indicative thereof;
means (70) for receiving and processing said input signals according to predetermined logic rules to detect the existence of conditions indicative of at least one of incipient and initial trailer brake induced trailer swing events and for generating command output signals in response to detection of the existence of said conditions; and
means for responding to said command output signals to cause said control means to cause the trailer brake system brakes to be applied with a substantially reduced force (210-212) regardless of the magnitude of said demand signal.

23. The control system of claim 22 wherein said control means is mounted on said tractor.

24. The control system of claim 23 wherein said sensors (172, 174) are mounted on said tractor.

25. The control system of claims 22, 23 or 24 wherein said control means responds to said command output signals by first causing said trailer brake system brakes to be released (212-214) for a determined period of time (T) and then causing said trailer brake system brakes to be reapplied (214-216).

26. The control system of claim 25 wherein subsequent to releasing said trailer system trailer brakes said trailer brake system brakes are reapplied at a determined rate (R) to a determined maximum reapplication force (P), said determined maximum reapplication force having a magnitude considerably smaller than the maximum trailer brake system brake application force (208, 210).

27. The control system of claims 22, 23 or 24 wherein said means for sensing senses and/or calculates values indicative of all of articulation angle (AA), rate of change of articulation angle (dAA/dt) and rate of change of rate of change of articulation angle (d²AA/dt²) and providing articulation signals indicative thereof; and
said means for processing said input signals to determine the existence of said conditions comprises means for (i) sensing that the operator has demanded at least partial braking, (ii) sensing that articulation angle and rate of change of articulation angle are in opposite directions of rotation about said pivot axis and (iii) sensing that the absolute value of the rate of change of the rate of change of articulation angle (d²AA/dt²) exceeds the absolute value of a reference value.

28. The control system of claim 27 additionally comprising sensing a value indicative of the turning radius of said vehicle, said reference value being a function of said value indicative of turning radius.

29. The control system of claim 27 wherein said sensing comprises sensing and/or calculating values indicative of articulation angle (AA) and at least one time derivative of articulation angle and providing articulation signals indicative thereof; and said processing said input signals to determine the existence of said conditions comprises (i) sensing that the operator has demanded at least partial braking, (ii) sensing that articulation angle and said at least one of said time derivatives of articulation angle are in opposite directions of rotation about said pivot axis and (iii) sensing that the absolute value of said at least one of said time derivatives of articulation angle exceeds the absolute value of a reference value.

30. A method for sensing conditions indicative of the onset of a trailer swing event in an articulated vehicle (10) comprising:
determining the value of articulation angle and the value of at least one derivative with respect to time of articulation angle,
comparing the signs of the value of the articulation angle and the value of the at least one time derivative of articulation angle, and
comparing the absolute value of one of the values to the absolute value of a reference value.

31. The method of claim 3O including the step of comparing the absolute value of said time derivative of articulation angle to the absulute value of a second reference value and the absolute value of another value with the first reference value.

## Patentansprüche

1. Antiswing-Bremssteuerverfahren für gelenkig gekuppelte Züge (10), die eine Zugmaschine (12) und einen Hänger (14) aufweisen, der über eine Gelenkkupplung (34/176) angekuppelt ist, die eine Schwenkachse (176) definiert, bezüglich der der Hänger gegenüber der Zugmaschine schwenken kann, wobei ein Beugewinkel (AA) des Zugs durch den Winkel definiert ist, den eine durch die Schwenkachse führende Längsachse (202) des Hängers mit einer durch die Schwenkachse gehende Längsachse (200) der Zugmaschine einschließt; mit einem Bremssystem für die Zugmaschine; mit einem Bremssystem für den Hänger; mit einer vom Fahrer zu betätigenden Einrichtung (76/78) zur Bremsanforderung, um ein Anforderungseingangssignal zu erzeugen, das für die vom Fahrer vorgegebene Stärke für das Bremsen des Zugs kennzeichned ist; mit für die Hängerbremsen vorgesehenen Steuermitteln (174), die in wenigstens einer Betriebsweise bewirken, daß das Hängerbremssystem mit einer Betätigungskraft angezogen wird, die im wesentlichen der Größe des Anforderungseingangssignals proportional ist; wobei das Steuerverfahren die Schritte aufweist:
es wird ein Wert, der für den Beugewinkel (AA) kennzeichnend ist, und eine Ableitung des Beugewinkels (dAA/dt, d²AA/dt²) gemessen und/oder berechnet, sowie wenigstens ein dafür charakteristisches Beugewinkel-Eingangssignal erzeugt wird;
es werden die Eingangssignale (70) empfangen und gemäß festgelegter Logikregeln verarbeitet werden, um Bedingungen zu erkennen, die zumindest für ein bevorstehendes oder beginnendes durch die Hängerbremsen induziertes Hängerschwingen charakteristisch sind und es werden Ausgangssteuersignale in Abhängigkeit von dem Erkennen dieser Zustände abgegeben; und
die Steuermittel sprechen (174) auf diese Ausgangssteuersignale an, um zu veranlassen, daß die Bremsen des Hängerbremssystems mit einer wesentlich geringeren Kraft angezogen werden (210-212), unabhängig von der Größe des Bremsanforderugnssignals.

2. Steuerverfahren nach Anspruch 1, bei dem die Steuermittel auf der Zugmaschine angeordnet sind.

3. Steuerverfahren nach Anspruch 1, bei dem die Ermittlung mittels Sensoren (172,174) erfolgt, die auf der Zugmaschine angeordnet sind.

4. Steuerverfahren nach Anspruch 1, 2 oder 3, bei dem die Steuermittel auf das Steuerausgangssignal ansprechen, indem sie zunächst veranlassen, daß die Bremsen des Hängerbremssystems eine Zeitspanne (T) lang im wesentlichen gelöst werden (212-214), und sodann bewirken, daß die Bremsen des Hängerbremssystems erneut angezogen werden (214-216).

5. Steuerverfahren nach Anspruch 4, bei dem nach dem Lösen der Bremsen des Hängerbremssystems die Bremsen des Hängerbremssystems mit einer vorbestimmten Rate (R) bis zu einem vorgegebenen Maximalkraft für die erneute Betätigung (P) erneut angezogen werden, wobei die vorbestimmte Maximalkraft für das erneute Anlegen eine Größe hat, die deutlich kleiner ist als die maximale Betätigungskraft (208, 210) der Bremsen des Hängerbremssystems.

6. Steuerverfahren nach Anspruch 4, bei dem die Zeitspanne im Bereich zwischen O,5 und 1,25 Sekunden liegt.

7. Steuerverfahren nach Anspruch 6, bei dem die Zeitspanne im Bereich zwischen O,5 bis O,75 Sekunden liegt.

8. Steuerverfahren nach Anspruch 5, bei dem die vorgewählte Maximalkraft (P) für das erneute Anziehen einer Funktion der Stärke des Absolutwertes wenigstens einer zeitlichen Ableitung des Beugewinkels ist und sich damit invers verändert.

9. Steuerverfahren nach Anspruch 1, 2, 3, 5, 6 oder 8, bei dem es zu dem Schritt des Ermittelns gehört, daß sowohl die Werte, die für den Beugewinkel (AA), als auch die Werte, die für die Änderungsgeschwindigkeit des Beugewinkels (dAA/dt) als auch die Werte, die für die Änderungsgeschwindigkeit der Änderungsgeschwindigkeit des Beugewinkels (d₂AA/dt₂) kennzeichnend sind, bestimmt werden und hierfür kennzeichnende Beugewinkelsignale erzeugt werden; und
bei dem es zum Verarbeiten der Eingangssignale zwecks Ermittlung der Existenz der besagten Bedingungen gehört, (i) festzustellen, daß der Fahrer zumindest ein gewisses Bremsen angefordert hat, (ii) zu ermitteln, daß der Beugewinkel und die Änderungsgeschwindigkeit des Beugewinkels entgegengesetzte Vorzeichen aufweisen und (iii) festzustellen, daß der Betrag der Änderungsgeschwindigkeit der Änderungsgeschwindigkeit des Beugewinkels (d₂AA/dt₂) den Betrag eines vorbestimmten Referenzwertes übersteigt.

10. Verfahren nach Anspruch 9, das zusätzlich das Messen eines Wertes umfaßt, der für den Kurvenradius des Zuges kennzeichnend ist, wobei der Bezugswert eine Funktion des Wertes ist, der für den Kurvenradius kennzeichnend ist.

11. Steuerverfahren nach Anspruch 4, bei dem das Ermitteln die Bestimmung sowohl von Werten, sowohl für den Beugewinkel (AA), als auch von Werten, die für die Änderungsgeschwindigkeit des Beugewinkels (dAA/dt), als auch von Werten, die für die Änderungsgeschwindigkeit der Änderungsgeschwindigkeit des Beugewinkels (d₂AA/dt₂) kennzeichnend sind, und die Erzeugung von Beugewinkelsignale umfaßt, die hierfür kennzeichnend sind und bei dem
es zu der Verarbeitung der Eingangssignale zwecks Bestimmung des Vorliegens der besagten Bedingungen gehört, daß (i) festgestellt wird, daß der Fahrer zumindest ein gewisses Bremsen angefordert hat, daß (ii) gemessen wird, daß der Beugewinkel und die Änderungsgeschwindigkeit des Beugewinkels entgegengesetzte Vorzeichen aufweisen und daß (iii) gemessen wird, ob der Betrag der Änderungsgeschwindigkeit der Änderungsgeschwindigkeit des Beugewinkels (d₂AA/dt₂) einen vorbestimmten Bezugswert übersteigt.

12. Verfahren nach Anspruch 11, das zusätzlich das Messen eines Wertes umfaßt, das für den Kurvenradius des Zuges kennzeichend ist, wobei der Bezugswert eine Funktion des Wertes ist, der für den Kurvenradius kennzeichend ist.

13. Verfahren nach Anspruch 1, 2 oder 3, bei dem die Steuermittel ein Relaisventil aufweisen, das mit einem ABS-Ventil in Serie geschaltet ist.

14. Verfahren nach Anspruch 4, bei dem die Steuermittel ein Relaisventil aufweisen, das mit einem ABS-Ventil in Serie geschaltet ist.

15. Verfahren nach Anspruch 5, bei dem die Steuermittel ein Relaisventil aufweisen, das mit einem ABS-Ventil in Serie geschaltet ist.

16. Steuerverfahren nach Anspruch 1, 2 oder 3, bei dem der Zug ein Sattelzug ist und bei dem die Zugmaschine mit ABS ausgerüstet ist.

17. Steuerverfahren nach Anspruch 1, 2 oder 3, bei dem das Bestimmen die Ermittlung der Werte, die für den Beugewinkel (AA) und wenigstens eine zeitliche Ableitung des Beugewinkels kennzeichnend sind, und die Erzeugung der hierfür kennzeichnende Beugewinkelsignale umfaßt; und
bei dem es zu der Verarbeitung der Eingangssignale zwecks Bestimmung des Vorhandenseins der besagten Bedingungen gehört, daß (i) festgestellt wird, daß der Fahrer zumindest ein gewisses Bremsen angefordert hat, daß (ii) gemessen wird, daß der Beugewinkel und die wenigstens eine zeitliche Ableitung des Beugewinkels entgegengesetzte Drehrichtung bezüglich der Schwenkachse aufweisen und daß (iii) gemessen wird, daß der Betrag der wenigstens einen zeitlichen Ableitung des Beugewinkels den Betrag eines vorbestimmten Bezugswerts übersteigt.

18. Steuerverfahren nach Anspruch 17, das zusätzlich das Messen eines Wertes umfaßt, der für den Kurvenradius des Zuges kennzeichnend ist, wobei der Bezugswert eine Funktion des Wertes ist, der für den Kurvenradius kennzeichend ist.

19. Steuerverfahren nach Anspruch 18, bei dem die vorgewählte Maximalkraft (P) für das erneute Anziehen eine Funktion der Stärke des Absolutwertes wenigstens einer zeitlichen Ableitung des Beugewinkels ist und sich damit invers verändert.

20. Steuerverfahren nach Anspruch 5, bei dem die Größe der festgelegten Maximalkraft für das erneute Anlegen eines Funktion von wenigstens entweder dem Beugewinkel (AA) und einer zeitlichen Ableitung der Änderungsgeschwindigkeit des Beugewinkels (AA₂/dt₂) ist.

21. Steuerverfahren nach Anspruch 20, bei dem die Bestimmung der Maximalkraft für das erneute Anlegen eine Funktion sowohl des Beugewinkels als auch der Änderungsgeschwindigkeit des Beugewinkels zum Zeitpunkt der Erfassung des Vorliegens der besagten Bedingungen ist, wobei die Größe der bestimmten Maximalkraft für das erneute Anlegen invers mit dem Absolutwert der Änderungsgeschwindigkeit der Änderungsgeschwindigkeit des Beugewinkels variiert.

22. Antiswing-Bremssteuersystem für gelenkig gekuppelte Züge (10), die eine Zugmaschine (12) und einen Hänger (14) aufweisen, der über eine Gelenkkupplung (34/176) angekuppelt ist, die eine Schwenkachse (176) definiert, bezüglich der der Hänger gegenüber der Zugmaschine schwenken kann, wobei ein Beugewinkel (AA) des Zugs durch den Winkel definiert ist, den eine durch die Schwenkachse führende Längsachse (202) des Hängers mit einer durch die Schwenkachse gehende Längsachse (200) der Zugmaschine einschließt; mit einem Bremssystem für die Zugmaschine; mit einem Bremssystem für den Hänger; mit einer vom Fahrer zu betätigenden Einrichtung (76/78) zur Bremsanforderung, um ein Anforderungseingangssignal zu erzeugen, das für die vom Fahrer vorgegebene Stärke für das Bremsen des Zugs kennzeichnend ist; mit für die Hängerbremsen vorgesehenen Steuermitteln (174), die in wenigstens einer Betriebsweise bewirken, daß das Hängerbremssystem mit einer Betätigungskraft angezogen wird, die im wesentlichen der Größe des Anforderungseingangssignals proportional ist; wobei das Steuerverfahren aufweist:
Mittel (170/172), um einen Wert, der für den Beugewinkel (AA) kennzeichnend ist, und eine zeitliche Ableitung (dAA/dt,d²AA/dt²) desselben zu ermitteln, sowie um wenigstens ein dafür charakteristisches Beugewinkel-Eingangssignal zu erzeugen;
Mittel (70), um die Eingangssignale zu empfangen und gemäß festgelegter Logikregeln zu verarbeiten, um die Existenz von Bedingungen zu erkennen, die zumindest für ein bevorstehendes oder beginnendes durch die Hängerbremsen induziertes Hängerschwingen charakteristisch sind, und um Ausgangssteuersignale in Abhängigkeit von dem Erkennen dieser Zustände abzugeben; und
Mittel, die auf diese Ausgangssteuersignale ansprechen, um die Steuermittel zu veranlassen, daß sie veranlassen, daß die Bremsen des Hängerbremssystems mit einer wesentlich geringeren Kraft (210-212) angezogen werden, unabhängig von der Größe des Bremsanforderugnssignals.

23. Steuersystem nach Anspruch 22, bei dem die Steuermittel auf der Zugmaschine angeordnet sind.

24. Steuersystem nach Anspruch 23, bei dem die Sensoren (172,174) auf der Zugmaschine angeordnet sind.

25. Steuersystem nach Anspruch 22, 23 oder 24, bei dem die Steuermittel auf die Steuerausgangssignale reagieren, indem sie zunächst veranlassen, daß die Bremsen des Hängerbremssystems eine vorbestimmte Zeitspanne (T) lang gelöst werden (212-214), und sodann bewirken, daß die Bremsen des Hängerbremssystems erneut angezogen werden (214-216).

26. Steuersystem nach Anspruch 25, bei dem nach dem Lösen der Bremsen des Hängerbremssystems die Bremsen des Hängerbremssystems mit einer vorbestimmten Rate (R) auf eine vorbestimmte Maximalkraft (P) für das erneute Anlegen angezogen werden, wobei die vorbestimmte Maximalkraft für das erneute Anziehen eine Größe aufweist, die deutlich kleiner ist als die maximale Betätigungskraft (208, 210) für die Bremsen des Hängerbremssystems.

27. Steuersystem nach Anspruch 22, 23 oder 24, bei dem die Mittel zum Erfassen Werte ermitteln und/oder berechnen, die sowohl für den Beugewinkel (AA) als auch für die Änderungsgeschwindigkeit des Beugewinkels (dAA/dt) als auch für die Änderungsgeschwindigkeit der Änderungsgeschwindigkeit des Beugewinkels (d₂AA/dt₂) kennzeichnend sind, und Beugewinkelsignale erzeugen, die hierfür kennzeichnend sind, und bei dem
die Mittel zur Verarbeitung der Eingangssignale zwecks Bestimmung des Vorliegens der besagten Bedingungen Mittel umfassen, die (i) festgestellen, daß der Fahrer zumindest ein gewisses Bremsen angefordert hat, die (ii) messen, daß der Beugewinkel und die Änderungsgeschwindigkeit des Beugewinkels entgegengesetzte Drehrichtung bezüglich der Schwenkachse aufweisen, und die (iii) messen, ob der Betrag der Änderungsgeschwindigkeit der Änderungsgeschwindigkeit des Beugewinkels (d₂AA/dt₂) den Betrag eines vorbestimmten Bezugswerts übersteigt.

28. Steuersystem nach Anspruch 27, bei dem zusätzlich das Messen eines Wertes vorgesehen ist, der für den Kurvenradius des Zuges kennzeichnend ist, wobei der Referenzwert eine Funktion des für den Kurvenradius kennzeichnenden Wertes ist.

29. Steuersystem nach Anspruch 27, bei dem das Ermitteln die Bestimmung und/oder Berechnung von Werten, die sowohl für den Beugewinkel (AA) als auch für wenigstens eine zeitliche Ableitung des Beugewinkels kennzeichnend sind, und die Erzeugung von Beugewinkelsignale umfaßt, die hierfür kennzeichnend sind und bei dem
es zu der Verarbeitung der Eingangssignale zwecks Bestimmung des Vorliegens der besagten Bedingungen gehört, daß (i) festgestellt wird, daß der Fahrer zumindest ein gewisses Bremsen angefordert hat, daß (ii) gemessen wird, daß der Beugewinkel und die Änderungsgeschwindigkeit des Beugewinkels entgegengesetzte Drehrichtung bezüglich der Schwenkachse aufweisen und daß (iii) ermittelt wird, ob der Betrag der wenigstens einen zeitlichen Ableitung des Beugewinkels den Betrg eines vorbestimmten Bezugswerts übersteigt.

30. Verfahren zum Ermitteln von Zuständen, die für den Beginn des Schwingens des Hängers bei einem gelenkig gekuppelten Zug (10) kennzeichnend sind, mit den Schritten:
es wird der Wert des Beugewinkels und der Wert wenigstens einer zeitlichen Ableitung des Beugewinkels bestimmt,
es wird das Vorzeichen des Wertes für den Beugewinkel mit dem Wert für wenigstens eine zeitliche Ableitung des Beugewinkels verglichen und
es wird der Betrag eines der Werte mit dem Betrag des Bezugswertes verglichen.

31. Verfahren nach Anspruch 30 mit dem weiteren Schritt des Vergleichens des Betrags der zeitlichen Ableitung des Beugewinkels mit dem Betrag eines zweiten Bezugswertes und des Betrags eines anderen Wertes mit dem ersten Bezugswert.

## Revendications

1. Procédé de commande de freinage anti-oscillation pendulaire de remorque pour véhicules articulés (10) du type comportant un tracteur (12) et une remorque (14) reliés au niveau d'une liaison articulée (34, 176) définissant un axe de pivotement (176) autour duquel la remorque peut pivoter par rapport au tracteur, un angle d'articulation (AA) dudit véhicule défini par l'angle inclus défini par un axe de la remorque s'étendant longitudinalement et passant par ledit axe de pivotement (202) par rapport à un axe du tracteur s'étendant longitudinalement et passant par ledit axe de pivotement (200), un système de freinage de tracteur, un système de freinage de remorque, un dispositif (76, 78) de demande d'effort de freinage actionné par le conducteur pour fournir un signal d'entrée de demande représentatif de l'amplitude de la demande de l'opérateur concernant le freinage du véhicule, des moyens (174) de commande du freinage de remorque sensibles dans au moins un mode opératoire pour entraîner le système de freinage de remorque à entre appliqué avec une force active de manière générale proportionnelle à l'amplitude dudit signal d'entrée de demande, ledit procédé de commande comportant les étapes consistant à:
· détecter (170, 172) et/ou calculer une valeur représentative de l'angle d'articulation (AA), et une dérivée de l'angle d'articulation (d²AA/dt²) et fournir des signaux d'entrée d'articulation représentatifs de celles-ci,
· recevoir et traiter lesdits signaux d'entrée (70) conformément à des règles logiques prédéterminées pour détecter l'existence de conditions représentatives d'au moins un des événements naissants et initiaux d'oscillation pendulaire de remorque induite par freinage de la remorque et engendrer des signaux de sortie de commande en réponse à la détection de l'existence desdites conditions, et
· répondre (174) par l'intermédiaire desdits moyens de commande auxdits signaux de sortie de commande en entraînant l'application des freins du système de freinage de remorque avec une force nettement réduite (210 à 212) quelle que soit l'amplitude dudit signal d'entrée de demande.

2. Procédé de commande selon la revendication 1, dans lequel lesdits moyens de commande sont montés sur ledit tracteur.

3. Procédé de commande selon la revendication 1, dans lequel ladite détermination est effectuée par des détecteurs (172, 174) montés sur ledit tracteur.

4. Procédé de commande selon la revendication 1, 2 ou 3 dans lequel lesdits moyens de commande répondent auxdits signaux de sortie de commande en entraînant tout d'abord lesdits freins du système de freinage de la remorque à être nettement relâchés (212 à 214) sur une période de temps (T) et ensuite en amenant lesdits freins du système de freinage de la remorque à entre appliqués à nouveau (214 à 216).

5. Procédé de commande selon la revendication 4, dans lequel après avoir libéré lesdits freins du système de freinage de la remorque lesdits freins du système de freinage de la remorque sont appliqués à nouveau avec un vitesse choisie (R) vers une force d'application à nouveau maximale choisie (P), ladite force d'application à nouveau maximale choisie ayant une amplitude considérablement plus petite que la force maximale d'application des freins du système de freinage de la remorque (208, 210).

6. Procédé de commande selon la revendication 4, dans lequel ladite période de temps est située dans la plage allant d'environ 0,25 à 1,25 seconde.

7. Procédé de commande selon la revendication 6, dans lequel ladite période de temps est située dans la plage allant d'environ 0,50 à 0,75 seconde.

8. Procédé de commande selon la revendication 5, dans lequel ladite force (P) d'application à nouveau maximale choisie est une fonction de l'amplitude de la valeur absolue d'au moins une desdites dérivées par rapport au temps de l'angle d'articulation, et varie inversement par rapport à celle-ci.

9. Procédé de commande selon l'une quelconque des revendications 1, 2, 3, 5, 6 ou 8, dans lequel ladite détermination consiste à déterminer des valeurs représentatives de toutes les valeurs constituées de l'angle d'articulation (A), de la vitesse de changement de l'angle d'articulation (dAA/dt) et de la vitesse de changement de la vitesse de changement de l'angle d'articulation (d²AA/dt²) et à fournir des signaux d'articulation représentatifs de celles-ci, et ledit traitement desdits signaux d'entrée pour déterminer l'existence desdites conditions consiste à (i) détecter que l'opérateur a demandé au moins un freinage partiel, (ii) détecter que l'angle d'articulation et la vitesse de changement de l'angle d'articulation sont de signes opposés et (iii) détecter que la valeur absolue de la vitesse de changement de la vitesse de changement de l'angle d'articulation (d²AA/dt²) dépasse la valeur absolue d'une valeur de référence prédéterminée.

10. Procédé selon la revendication 9, comportant de plus la détection d'une valeur représentative du rayon de braquage dudit véhicule, ladite valeur de référence étant une fonction de ladite valeur représentative du rayon de braquage.

11. Procédé de commande selon la revendication 4, dans lequel ladite détection consiste à déterminer les valeurs représentatives de toutes les valeurs constituées de l'angle d'articulation (AA), de la vitesse de changement de l'angle d'articulation (dAA/dt), et de la vitesse de changement de la vitesse de changement de l'angle d'articulation (d²AA/dt²) et à fournir des signaux d'articulation représentatifs de celles-ci et
ledit traitement desdits signaux d'entrée pour déterminer l'existence desdites conditions consiste à (i) détecter que l'opérateur a demandé au moins un freinage partiel, (ii) détecter que l'angle d'articulation et la vitesse de changement de l'angle d'articulation sont de signes opposés et (ii) détecter que la valeur absolue de la vitesse de changement de la vitesse de changement de l'angle d'articulation (d²AA/dt²) dépasse une valeur de référence prédéterminée.

12. Procédé de commande selon la revendication 11, comportant de plus la détection d'une valeur représentative du rayon de braquage dudit véhicule, ladite valeur de référence étant une fonction de ladite valeur représentative du rayon de braquage.

13. Procédé de commande selon l'une quelconque des revendications 1, 2 ou 3, dans lequel lesdits moyens de commande sont constitués d'une vanne relais reliée en série à une vanne du type ABS.

14. Procédé de commande selon la revendication 4, dans lequel lesdits moyens de commande sont constitués d'une vanne relais reliée en série à une vanne du type ABS.

15. Procédé de commande selon la revendication 5, dans lequel lesdits moyens de commande sont constitués d'une vanne relais reliée en série à une vanne du type ABS.

16. Procédé de commande selon l'une quelconque des revendications 1, 2 ou 3, dans lequel ledit véhicule est un véhicule du type tracteur-semi-remorque et ledit tracteur est équipé d'un système ABS de tracteur.

17. Procédé de commande selon l'une quelconque des revendications 1, 2 ou 3, dans lequel ladite détermination consiste à déterminer des valeurs représentatives de l'angle d'articulation (AA) et au moins une dérivée de l'angle d'articulation par rapport au temps et à fournir des signaux d'articulation représentatifs de celles-ci, et ledit traitement desdits signaux d'entrée pour déterminer l'existence desdites conditions consiste à (i) détecter que l'opérateur a demandé au moins un freinage partiel, (ii) détecter que l'angle d'articulation et ladite au moins une desdites dérivées de l'angle d'articulation par rapport au temps sont de signes opposés et (iii) détecter que la valeur absolue de ladite au moins une dérivée de l'angle d'articulation par rapport au temps dépasse la valeur absolue d'une valeur de référence.

18. Procédé de commande selon la revendication 17, comportant de plus la détection d'une valeur représentative dudit rayon de braquage dudit véhicule, ladite valeur de référence étant une fonction de ladite valeur représentative du rayon braquage.

19. Procédé de commande selon la revendication 18, dans lequel ladite force (P) d'application à nouveau maximale choisie est une fonction de l'amplitude de la valeur absolue de ladite au moins une desdites dérivées de l'angle d'articulation par rapport au temps, et varie inversement par rapport à celle-ci.

20. Procédé de commande selon la revendication 5, dans lequel l'amplitude de ladite force d'application à nouveau maximale déterminée est une fonction d'au moins l'un parmi l'angle d'articulation (AA) et une dérivée par rapport au temps de la vitesse de changement de l'angle d'articulation (d2AA/dt2)

21. Procédé de commande selon la revendication 20, dans lequel ladite force d'application à nouveau maximale déterminée est une fonction d'à la fois l'angle d'articulation et la vitesse de changement de la vitesse de changement de l'angle d'articulation au moment de la détection de l'existence desdites conditions, ladite amplitude de la force d'application à nouveau maximale déterminée variant inversement par rapport à la valeur absolue de la vitesse de changement de la vitesse de changement de l'angle d'articulation.

22. Système de commande de freinage anti-oscillation pendulaire de remorque pour véhicules articulés (10) du type comportant un tracteur (12) et une remorque (14) reliés au niveau d'une liaison articulée (34, 176) définissant un axe de pivotement (176) autour duquel la remorque peut pivoter par rapport au tracteur, un angle d'articulation (AA) dudit véhicule défini par un axe de la remorque s'étendant longitudinalement et passant par l'axe de pivotement (202) par rapport à un axe du tracteur s'étendant longitudinalement et passant par ledit axe de pivotement (200), un système de freinage du tracteur, un système de freinage de remorque, un dispositif (76, 78) de demande d'effort de freinage actionné par le conducteur pour fournir un signal d'entrée de demande représentatif de l'amplitude de la demande de l'opérateur concernant le freinage du véhicule, des moyens (174) de commande de freinage de la remorque sensibles dans au moins un mode opératoire pour entraîner le système de freinage de remorque à être appliqué avec une force active de manière générale proportionnelle à l'amplitude dudit signal de demande, ledit système de commande comportant:
· des moyens (170, 172) pour déterminer une valeur représentative de l'angle d'articulation (AA) et une dérivée par rapport au temps de celui-ci (dAA/dt, d²AA/dt²) et fournissant au moins un signal d'articulation représentatif de celles-ci,
· des moyens (70) pour recevoir et traiter lesdits signaux d'entrée conformément à des règles logiques prédéterminées pour détecter l'existence de conditions représentatives d'au moins un parmi des événements naissants et initiaux d'oscillation pendulaire de remorque induite par freinage de la remorque et pour engendrer des signaux de sortie de commande en réponse à la détection de l'existence desdites conditions, et
· des moyens pour répondre auxdits signaux de sortie de commande pour entraîner lesdits moyens de commande à appliquer les freins du système de freinage de la remorque avec une force nettement réduite (210 à 212) quelle que soit l'amplitude dudit signal de demande.

23. Système de commande selon la revendication 22, dans lequel lesdits moyens de commande sont montés sur ledit tracteur.

24. Système de commande selon la revendication 23, dans lequel lesdits détecteurs (172, 174) sont montés sur ledit tracteur.

25. Système de commande selon l'une quelconque des revendications 22, 23 ou 24, dans lequel lesdits moyens de commande répondent auxdits signaux de sortie de commande en entraînant tout d'abord le relâchement (212 à 214) des freins du système de freinage de la remorque sur une période de temps déterminée (T) et ensuite l'application à nouveau (214 à 216) desdits freins du système de freinage de la remorque.

26. Système de commande selon la revendication 25, dans lequel après avoir relâché lesdits freins du système de freinage de la remorque, lesdits freins du système de freinage de la remorque sont appliqués à nouveau avec une vitesse déterminée (R) vers une force (P) d'application à nouveau maximale déterminée, ladite force d'application à nouveau maximale déterminée ayant une amplitude considérablement plus petite que la force d'application (208, 210) maximale des freins du système de freinage de la remorque.

27. Système de commande selon l'une quelconque des revendications 22, 23 ou 24, dans lequel lesdits moyens pour détecter détectent et/ou calculent les valeurs représentatives de tous les éléments constitués de l'angle d'articulation (AA), de la vitesse de changement de l'angle d'articulation (dAA/dt) et de la vitesse de changement de la vitesse de changement de l'angle d'articulation (d2AA/dt2) et fournissent des signaux d'articulation représentatifs de ceux-ci, et lesdits moyens pour traiter lesdits signaux d'entrée pour déterminer l'existence desdites conditions sont constitués de moyens pour (i) détecter que l'opérateur a demandé au moins un freinage partiel, (ii) détecter que l'angle d'articulation et la vitesse de changement d'angle d'articulation sont dans des sens de rotation opposés autour dudit axe de pivotement et (iii) détecter que la valeur absolue de la vitesse de changement de la vitesse de changement de l'angle d'articulation (d2AA/dt2) dépasse la valeur absolue d'une valeur de référence.

28. Système de commande selon la revendication 27, comportant de plus la détection d'une valeur représentative du rayon de braquage dudit véhicule, ladite valeur de référence étant une fonction de ladite valeur représentative du rayon de braquage.

29. Système de commande selon la revendication 27, dans lequel ladite détection consiste à détecter et/ou calculer des valeurs représentatives de l'angle d'articulation (AA) et d'au moins une dérivée de l'angle d'articulation par rapport au temps et à fournir des signaux d'articulation représentatifs de celles-ci, et
ledit traitement desdits signaux d'entrée pour déterminer l'existence desdites conditions consiste à (i) détecter que l'opérateur a demandé au moins un freinage partiel, (ii) détecter que l'angle d'articulation et ladite au moins une desdites dérivées de l'angle d'articulation par rapport au temps sont dans des sens de rotation opposés autour dudit axe de pivotement et (iii) détecter que la valeur absolue de ladite au moins une desdites dérivées de l'angle d'articulation par rapport au temps dépasse la valeur absolue de la valeur de référence.

30. Procédé pour détecter des conditions représentatives de l'apparition d'un événement d'oscillation pendulaire de remorque de véhicule articulé (10) consistant à:
déterminer la valeur de l'angle d'articulation et la valeur d'au moins une dérivée de l'angle d'articulation par rapport au temps,
comparer les signes de la valeur de l'angle d'articulation et de la valeur de la au moins une dérivée de l'angle d'articulation par rapport au temps, et
comparer la valeur absolue de l'une des valeurs à la valeur absolue d'une valeur de référence.

31. Procédé selon la revendication 30 comportant l'étape consistant à comparer la valeur absolue de ladite dérivée de l'angle d'articulation par rapport au temps à la valeur absolue d'une seconde valeur de référence et la valeur absolue d'une autre valeur à la première valeur de référence.
